(19) Europäisches Patentamt
European Patent Office
Office européen des brevets

(11) Veröffentlichungsnummer: **0 022 954**
**B1**

# (12) EUROPÄISCHE PATENTSCHRIFT

(45) Veröffentlichungstag der Patentschrift: **02.02.83**

(51) Int. Cl.³: **C 07 F 9/18,** A 01 N 57/14

(21) Anmeldenummer: **80103716.9**

(22) Anmeldetag: **01.07.80**

(54) **O,S-Dialkyl-O-(4-fluorphenyl)-(di)thiophosphorsäureester, ihre Herstellung, ihre Verwendung zur Bekämpfung von Schädlingen und Mittel dafür.**

(30) Priorität: **18.07.79 DE 2928978**

(43) Veröffentlichungstag der Anmeldung: **28.01.81 Patentblatt 81/4**

(45) Bekanntmachung des Hinweises auf die Patenterteilung: **02.02.83 Patentblatt 83/5**

(84) Benannte Vertragsstaaten: **AT BE CH DE FR GB IT LI NL SE**

(73) Patentinhaber: **BASF Aktiengesellschaft, Carl-Bosch-Strasse 38, D-6700 Ludwigshafen (DE)**

(72) Erfinder: **Loeffler, Hans-Peter, Dr., Defreggerstrasse 14, D-6700 Ludwigshafen (DE)**
Erfinder: **Adolphi, Heinrich, Dr., Kalmitweg 11, D-6703 Limburgerhof (DE)**

(56) Entgegenhaltungen:
**DE-A-2 163 391**
**SU-A-482 460**

**SOVIET INVENTIONS ILLUSTRATED, Section Chemicals Derwent Publications Ltd., Week Y2 (1976)**
**CHEMICAL ABSTRACTS, vol. 80, Nr. 1, 7. Januar 1974, Seite 78, linke Spalte, Zusammenfassung 762b COLUMBUS, Ohio (US) K. C. JOSHI: „Organic pesticides. XV. Synthesis and insecticidal activity of some compounds containing phosphorus and fluorine"**
**CHEMICAL ABSTRACTS, vol. 68, Nr. 11, 11. März 1968, Seite 4761, rechte Spalte, Zusammenfassung 49300r COLUMBUS, Ohio (US)**
**CHEMICAL ABSTRACTS, vol. 57, Nr. 3, 6. August 1962, Zusammenfassung 3335i COLUMBUS, Ohio (US) K. C. JOSHI *et al.*: „Organic pesticides. VIII. Synthesis of haloaryl esters of phosphoric and thiophosphoric acids and certain related compounds"**

**EP 0 022 954 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# O,S-Dialkyl-O-(4-fluorphenyl)-(di)thiophosphorsäureester, ihre Herstellung, ihre Verwendung zur Bekämpfung von Schädlingen und Mittel dafür

Die Erfindung betrifft O,S-Dialkyl-O-(4-fluorphenyl)-(di)thiophosphorsäureester, ihre Herstellung, ihre Verwendung zur Bekämpfung von Schädlingen und Mittel dafür.

O,O-Dialkyl-O-(4-fluorphenyl)thiophosphorsäureester, die insektizid wirksam sind, sind aus Agrochemia (Bratislava) *5*, 24-28 (1965), „Pestic. Sci." *4*, 701-705 (1973), aus der SU-PS Nr. 482460 sowie aus der DE-AS Nr. 2163391 bekannt.

Es wurde gefunden, dass O,S-Dialkyl-O-(4-fluorphenyl)-(di)thiophosphorsäureester der Formel I

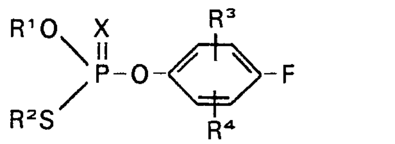

(I)

in der

$R^1$ Alkyl mit 1 bis 3 Kohlenstoffatomen,

$R^2$ Alkyl mit 1 bis 5 Kohlenstoffatomen, Cycloalkyl mit 5 oder 6 Kohlenstoffatomen, Alkoxyalkyl mit 2 bis 7 Kohlenstoffatomen oder Alkylthioalkyl mit 2 bis 7 Kohlenstoffatomen,

$R^3$ Wasserstoff, Halogen, Alkyl mit 1 bis 4 Kohlenstoffatomen, Halogenalkyl, Alkoxy oder Alkylthio mit jeweils 1 bis 4 Kohlenstoffatomen, Cyano oder Nitro,

$R^4$ Halogen, Alkyl mit 1 bis 4 Kohlenstoffatomen, Halogenalkyl, Alkoxy oder Alkylthio mit jeweils 1 bis 4 Kohlenstoffatomen, Cyano oder Nitro, und

X Sauerstoff oder Schwefel bedeuten,

wobei $R^4$ zusätzlich Wasserstoff bedeuten kann, wenn X für Schwefel steht oder wenn X für Sauerstoff und $R^2$ für Methyl, n-Propyl, sek.-Butyl, i-Butyl, tert.-Butyl, einen Pentylrest oder 2-Methoxyäthyl stehen, Schädlinge aus der Klasse der Insekten und Spinnentiere wirksam bekämpfen. Sie sind den bekannten O,O-Dialkyl-O-(4-fluorphenyl)-(di)thiophosphorsäureestern in ihrer Wirkung überlegen.

In Formel I stehen die Substituenten $R^1$ für Alkylreste mit 1 bis 3 Kohlenstoffatomen, wie Methyl, Äthyl, n-Propyl, i-Propyl, $R^2$ für Alkylreste mit 1 bis 5 Kohlenstoffatomen, wie Methyl, Äthyl, Propyl-, Butyl-, Pentylreste, für Cycloalkylreste mit 5 oder 6 Kohlenstoffatomen, wie Cyclopentyl, Cyclohexyl, für Alkoxyalkylreste mit 2 bis 7 Kohlenstoffatomen, insbesondere mit 2 bis 4 Kohlenstoffatomen, wie 2-Methoxyäthyl, 2-Äthoxyäthyl oder für Alkylthioalkylreste mit 2 bis 7 Kohlenstoffatomen, insbesondere mit 2 bis 4 Kohlenstoffatomen, wie 2-Methylthioäthyl, 2-Äthylthioäthyl, X für Sauerstoff oder Schwefel, $R^3$ und $R^4$ für Wasserstoff, Halogen, wie Fluor, Chlor, Brom, Alkyl mit 1 bis 4 Kohlenstoffatomen, wie Methyl, Äthyl, Halogenalkyl, Alkoxy oder Alkylthio mit jeweils 1 bis 4 Kohlenstoffatomen, wie Trifluormethyl, Methylthio, Methoxy, Cyano oder Nitro, wobei $R^4$ nur dann Wasserstoff bedeutet, wenn X für Schwefel steht, oder wenn X für Sauerstoff und $R^2$ für Methyl, n-Propyl, sek.-Butyl, i-Butyl, tert.-Butyl oder einen Pentylrest stehen.

Gegenstand der Erfindung ist weiterhin ein Verfahren zur Herstellung von O,S-Dialkyl-(4-fluorphenyl)-(di)thiophosphorsäureestern der Formel I, das dadurch gekennzeichnet ist, dass man ein O,S-Dialkylphosphorsäureesterchlorid der Formel II

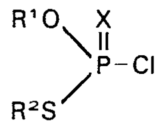

(II)

in der $R^1$, $R^2$ und X die im Anspruch 1 genannten Bedeutungen haben, mit einem Phenol der Formel III

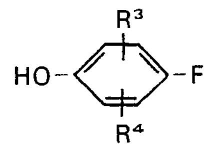

(III)

in der $R^3$ und $R^4$ die im Anspruch 1 genannten Bedeutungen haben, in Anwesenheit eines Lösungs- oder Verdünnungsmittels und gegebenenfalls in Gegenwart eines säurebindenden Mittels umsetzt.

Die Umsetzung wird in organischen Lösungs- oder Verdünnungsmitteln, wie Acetonitril, Toluol, Methyläthylketon, oder in zwei-Phasensystemen, wie Toluol/Wasser, Dichlormethan/Wasser, durch geführt. Zweckmässigerweise setzt man 1 bis 2 molare Mengen eines säurebindenden Mittels zu, bezogen auf Phenol der Formel III. Geeignet sind Basen, wie Alkalimetallcarbonate, z.B. Kaliumcarbonat, Alkalihydroxide — z.B. Natriumhydroxid —, oder tertiäre Amine, z.B. Triäthylamin. Anstelle von Base und Phenol kann ebenso ein Salz des Phenols eingesetzt werden. Die Umsetzung erfolgt bei Temperaturen zwischen Raumtemperatur und 100°C.

Zur Durchführung des Verfahrens setzt man die Ausgangsstoffe in äquimolaren Verhältnissen ein. Ein Überschuss der einen oder anderen Reaktionskomponente kann in einigen Fällen Vorteile bringen.

Die als Ausgangsstoffe verwendeten Phenole der Formel III können aus den entsprechenden fluorierten Anilinen hergestellt werden (DE-OS Nr. 2426994).

Aus 4-Fluorphenol können durch Halogenierung 2-Halogen-4-fluorphenole synthetisiert werden [„Zh. Obshch. Kh." *37*, S. 2486 (1967)]. Die Phosphorsäureesterchloride der Formel II lassen sich ebenfalls nach literaturbekannten Verfahren herstellen [DE-AS Nr. 2642982; „J. Org. Chem." *30*, 3217 (1965)].

Die erfindungsgemässen Verbindungen der Formel I können ausserdem aus Phosphorigsäureestern der Formel IV in einer Arbusow-Reaktion durch Umsetzung mit Sulfenylchloriden nach folgender Gleichung erhalten werden:

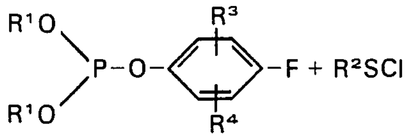

(IV)

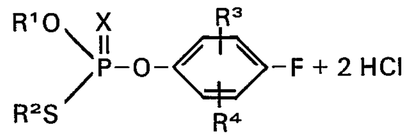

(I)

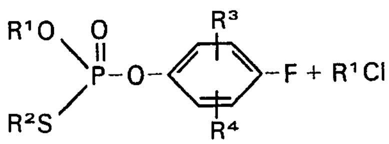

(I)

Ebenso sind die Verbindungen durch Alkylierung der Salze der Formel V mit einem Alkylierungsmittel $R^2Y$ zugänglich:

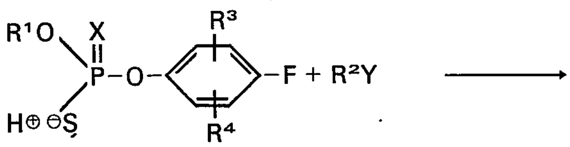

(V)

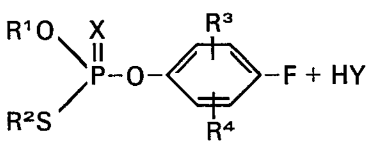

(I)

Geeignete Alkylierungsmittel sind beispielsweise Halogenide der Formel $R^2Y$, wobei Y für Halogen steht, und $R^2$ die obengenannten Bedeutungen hat, wie 2-Brombutan, 1-Chlorpropan.

Ausserdem ist es möglich, die Verbindungen durch Umsetzung von O-(4-fluorphenyl)phosphorsäureesterdichloriden der Formel VI mit Alkoholen und Mercaptanen zu erhalten:

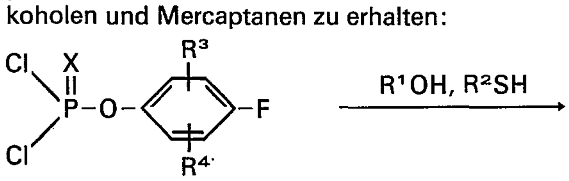


(VI)

In diesen aufgeführten Reaktionsgleichungen haben die Substituenten $R^1$, $R^2$, $R^3$, $R^4$ und X die obengenannten Bedeutungen.

Die Herstellung der erfindungsgemässen Verbindung wird durch das folgende Beispiel erläutert:

*Beispiel*

Zu 33,6 g 4-Fluorphenol in 300 ml Dichlormethan werden bei −20°C 15,3 ml Brom zugetropft. Man lässt 24 h stehen, danach hat sich die Lösung entfärbt. Durch Destillation erhält man 46 g 2-Brom-4-fluorphenol vom Siedepunkt 70°C/13,3 mbar.

Zu 13,4 g 2-Brom-4-fluorphenol, gelöst in 100 ml Acetonitril, gibt man 9,7 g Kaliumcarbonat und erwärmt unter Rühren 1 h lang auf 50°C. Dann tropft man 13,2 g O-Äthyl-S-n-propylthiophosphorsäureesterchlorid zu und rührt 3,5 h bei 50°C und anschliessend 12 h bei Raumtemperatur. Man entfernt das Lösungsmittel am Rotationsverdampfer, versetzt mit 400 ml Toluol und 100 ml Wasser, trennt die Phasen und wäscht die organische Phase mit 2N-Natronlauge und anschliessend mit Wasser, trocknet mit Natriumsulfat und entfernt das Lösungsmittel und flüchtige Verunreinigungen unter vermindertem Druck bei 40°C und 0,13 mbar. Man erhält als Rückstand 18,5 g O-Äthyl-S-n-propyl-O-(2-brom-4-fluorphenyl)-thiophosphat vom $n_D^{26}$ 1,5235.

Folgende Verbindungen lassen sich beispielsweise analog oder nach einem der oben beschriebenen Verfahren herstellen:

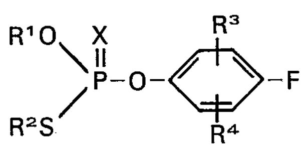

| Nr. | $R^1$ | $R^2$ | X | $R^3$ | $R^4$ | $n_D$ |
|---|---|---|---|---|---|---|
| 1 | $CH_3$ | n-$C_3H_7$ | S | H | H | |
| 2 | $C_2H_5$ | n-$C_3H_7$ | O | H | 2-Br | $n_D^{26}$ 1,5235 |
| 3 | $CH_3$ | n-$C_3H_7$ | O | H | H | |
| 4 | $CH_3$ | sek.-$C_4H_9$ | O | H | H | |
| 5 | $CH_3$ | sek.-$C_4H_9$ | S | H | H | |
| 6 | $CH_3$ | n-$C_3H_7$ | O | H | 2-Br | |
| 7 | $CH_3$ | sek.-$C_4H_9$ | O | H | 2-Cl | |
| 8 | $CH_3$ | n-$C_3H_7$ | O | H | 3-Cl | |

| Nr. | $R^1$ | $R^2$ | X | $R^3$ | $R^4$ | $n_D$ |
|---|---|---|---|---|---|---|
| 9 | $C_2H_5$ | n-$C_3H_7$ | O | H | H | $n_D^{24}$ 1,4973 |
| 10 | $C_2H_5$ | n-$C_3H_7$ | O | H | 2-Cl | $n_D^{24}$ 1,5110 |
| 11 | $C_2H_5$ | n-$C_3H_7$ | O | H | 2-F | $n_D^{25}$ 1,5145 |
| 12 | $C_2H_5$ | n-$C_3H_7$ | O | H | 3-Cl | |
| 13 | $C_2H_5$ | n-$C_3H_7$ | O | H | 3-F | |
| 14 | $C_2H_5$ | n-$C_3H_7$ | O | H | 3-$CH_3$ | |
| 15 | $C_2H_5$ | n-$C_3H_7$ | O | 6-Cl | 2-Cl | |
| 16 | $C_2H_5$ | n-$C_3H_7$ | O | H | 2-CN | |
| 17 | $C_2H_5$ | n-$C_3H_7$ | O | H | 2-$SCH_3$ | |
| 18 | $C_2H_5$ | n-$C_3H_7$ | S | H | H | $n_D^{26}$ 1,5360 |
| 19 | $C_2H_5$ | n-$C_3H_7$ | S | H | 2-Cl | $n_D^{21}$ 1,5470 |
| 20 | $C_2H_5$ | n-$C_3H_7$ | S | H | 2-Br | $n_D^{24}$ 1,5602 |
| 21 | $C_2H_5$ | n-$C_3H_7$ | S | H | 2-F | |
| 22 | $C_2H_5$ | n-$C_3H_7$ | S | H | 3-Cl | $n_D^{25}$ 1,5463 |
| 23 | $C_2H_5$ | n-$C_3H_7$ | S | H | 3-F | |
| 24 | $C_2H_5$ | n-$C_3H_7$ | S | H | 3-$CH_3$ | |
| 25 | $C_2H_5$ | n-$C_3H_7$ | S | 6-Cl | 2-Cl | Öl |
| 26 | $C_2H_5$ | n-$C_3H_7$ | S | H | 2-$CH_3$ | |
| 27 | $C_2H_5$ | n-$C_3H_7$ | S | H | 2-CN | |
| 28 | $C_2H_5$ | n-$C_3H_7$ | S | H | 2-$SCH_3$ | |
| 29 | $C_2H_5$ | i-$C_3H_7$ | O | H | 2-Cl | |
| 30 | $C_2H_5$ | i-$C_3H_7$ | O | H | 2-Br | |
| 31 | $C_2H_5$ | i-$C_3H_7$ | O | H | 2-$CH_3$ | |
| 32 | $C_2H_5$ | i-$C_3H_7$ | O | H | 3-Cl | |
| 33 | $C_2H_5$ | i-$C_3H_7$ | O | H | 3-F | |
| 34 | $C_2H_5$ | i-$C_3H_7$ | S | H | 2-Cl | |
| 35 | $C_2H_5$ | i-$C_3H_7$ | S | H | 2-Br | |
| 36 | $C_2H_5$ | i-$C_3H_7$ | S | H | 2-$CH_3$ | |
| 37 | $C_2H_5$ | i-$C_3H_7$ | S | H | 3-Cl | |
| 38 | $C_2H_5$ | i-$C_3H_7$ | S | H | 3-F | |
| 39 | $C_2H_5$ | sek.-$C_4H_9$ | O | H | H | $n_D^{25}$ 1,5004 |
| 40 | $C_2H_5$ | sek.-$C_4H_9$ | O | H | 2-Cl | $n_D^{21}$ 1,5120 |
| 41 | $C_2H_5$ | sek.-$C_4H_9$ | O | H | 2-Br | $n_D^{29}$ 1,5206 |
| 42 | $C_2H_5$ | sek.-$C_4H_9$ | O | H | 2-F | |
| 43 | $C_2H_5$ | sek.-$C_4H_9$ | O | H | 3-F | |
| 44 | $C_2H_5$ | sek.-$C_4H_9$ | O | H | 3-Cl | $n_D^{22}$ 1,515 |
| 45 | $C_2H_5$ | sek.-$C_4H_9$ | O | H | 3-F | |
| 46 | $C_2H_5$ | sek.-$C_4H_9$ | O | 6-Cl | 2-Cl | |
| 47 | $C_2H_5$ | sek.-$C_4H_9$ | O | 6-Br | 2-Br | |
| 48 | $C_2H_5$ | sek.-$C_4H_9$ | O | 6-Br | 2-Br | |
| 49 | $C_2H_5$ | sek.-$C_4H_9$ | O | H | 3-$CH_3$ | |
| 50 | $C_2H_5$ | sek.-$C_4H_9$ | O | H | 2-$CH_3$ | |
| 51 | $C_2H_5$ | sek.-$C_4H_9$ | S | H | H | $n_D^{25}$ 1,5320 |
| 52 | $C_2H_5$ | sek.-$C_4H_9$ | S | H | 2-Cl | $n_D^{22}$ 1,5421 |
| 53 | $C_2H_5$ | sek.-$C_4H_9$ | S | H | 2-Br | $n_D^{30}$ 1,5530 |

| Nr. | $R^1$ | $R^2$ | X | $R^3$ | $R^4$ | $n_D$ |
|---|---|---|---|---|---|---|
| 54 | $C_2H_5$ | sek.-$C_4H_9$ | S | H | 2-F | |
| 55 | $C_2H_5$ | sek.-$C_4H_9$ | S | H | 3-Cl | $n_D^{22}$ 1,5466 |
| 56 | $C_2H_5$ | sek.-$C_4H_9$ | S | H | 3-F | |
| 57 | $C_2H_5$ | sek.-$C_4H_9$ | S | 6-Cl | 2-Cl | |
| 58 | $C_2H_5$ | sek.-$C_4H_9$ | S | 6-Br | 2-Br | |
| 59 | $C_2H_5$ | sek.-$C_4H_9$ | S | H | 3-$CH_3$ | |
| 60 | $C_2H_5$ | sek.-$C_4H_9$ | S | H | 2-$CH_3$ | |
| 61 | $C_2H_5$ | i-$C_4H_9$ | O | H | H | |
| 62 | $C_2H_5$ | i-$C_4H_9$ | O | H | 3-Cl | |
| 63 | $C_2H_5$ | i-$C_4H_9$ | O | H | 2-Cl | |
| 64 | $C_2H_5$ | i-$C_4H_9$ | O | H | 2-Br | |
| 65 | $C_2H_5$ | i-$C_4H_9$ | S | H | H | $n_D^{28}$ 1,5282 |
| 66 | $C_2H_5$ | i-$C_4H_9$ | S | H | 3-Cl | $n_D^{22}$ 1,5400 |
| 67 | $C_2H_5$ | i-$C_4H_9$ | S | H | 2-Cl | $n_D^{26}$ 1,5375 |
| 68 | $C_2H_5$ | i-$C_4H_9$ | S | H | 2-Br | |
| 69 | $C_2H_5$ | $CH_3O-(CH_2)_2$ | O | H | H | |
| 70 | $C_2H_5$ | $CH_3O-(CH_2)_2$ | O | H | 2-Cl | $n_D^{23}$ 1,5146 |
| 71 | $C_2H_5$ | $CH_3O-(CH_2)_2$ | O | H | 2-Br | $n_D^{32}$ 1,5220 |
| 72 | $C_2H_5$ | $CH_3O-(CH_2)_2$ | O | H | 3-Cl | $n_D^{24}$ 1,5159 |
| 73 | $C_2H_5$ | $CH_3O-(CH_2)_2$ | O | H | 2-Cl | |
| 74 | $C_2H_5$ | $CH_3O-(CH_2)_2$ | O | H | 2-Br | |
| 75 | $C_2H_5$ | $CH_3O-(CH_2)_2$ | O | 2-Cl | 6-Cl | |
| 76 | $C_2H_5$ | $CH_3O-(CH_2)_2$ | O | 2-Br | 6-Br | |
| 77 | $CH_3$ | $CH_3O-(CH_2)_2$ | O | H | 2-Cl | |
| 78 | $CH_3$ | $CH_3O-(CH_2)_2$ | O | H | 2-Br | |
| 79 | $C_2H_5$ | $C_2H_5-S-(CH_2)_2$ | O | H | 2-Cl | |
| 80 | $C_2H_5$ | $C_2H_5-S-(CH_2)_2$ | O | H | 2-Br | |
| 81 | $C_2H_5$ | $C_2H_5-S-(CH_2)_2$ | O | 2-Cl | 6-Cl | |
| 82 | $C_2H_5$ | $C_2H_5-S-(CH_2)_2$ | O | 6-Br | 2-Br | |
| 83 | $C_2H_5$ | $C_5H_{11}$ | O | H | H | |
| 84 | $C_2H_5$ | $C_5H_{11}$ | O | H | 2-Br | |
| 85 | $C_2H_5$ | $C_5H_{11}$ | O | H | 2-Cl | |
| 86 | $C_2H_5$ | $C_5H_{11}$ | S | H | H | |
| 87 | $C_2H_5$ | $C_5H_{11}$ | S | H | 2-Cl | |
| 88 | $C_2H_5$ | $C_5H_{11}$ | S | H | 2-Br | |
| 89 | $C_2H_5$ | $n\text{-}C_3H_7-\overset{CH_3}{\overset{\vert}{C}H}-$ | O | H | H | |
| 90 | $C_2H_5$ | $n\text{-}C_3H_7-\overset{CH_3}{\overset{\vert}{C}H}-$ | O | H | 2-Br | |

Die erfindungsgemässen O,S-Dialkyl-(4-fluorphenyl)-(di)thiophosphorsäureester der Formel I sind geeignet, Schädlinge aus der Klasse der Insekten und Spinnentiere wirksam zu bekämpfen.

Zu den schädlichen Insekten gehören

— aus der Ordnung der Schmetterlinge *(Lepidoptera)* beispielsweise *Plutella maculipennis* (Kohlschabe), *Leucoptera coffeella* (Kaffeemotte), *Hyponomeuta malinellus* (Apfelbaumgespinstmotte), *Argyresthia conjugella* (Apfelmotte), *Sitotroga cerealella* (Getreidemotte), *Phthorimaea operculella* (Kartoffelmotte), *Capua reticulana* (Apfelschalenwickler), *Sparganothis pilleriana* (Springwurm), *Cacoecia murinana* (Tannentriebwickler), *Tortrix viridana* (Eichenwickler), *Clysia ambiguella* (Heu- und Sauerwurm), *Evetria buoliana* (Kieferntriebwickler), *Polychrosis botrana* (Bekreuzter Traubenwickler), *Cydia pomonella* (Obstmade), *Laspeyresia molesta* (Pfirsichtriebbohrer), *Laspeyresia funebrana* (Pflaumenwickler), *Ostrinia nubilalis* (Maiszünsler), *Loxostege sticticalis* (Rübenzünsler), *Ephestia kuehniella* (Mehlmotte), *Chilo suppressalis* (Reisstengelbohrer), *Galleria mellonella* (Wachsmotte), *Malacosoma neustria* (Ringelspinner), *Dendrolimus pini* (Kiefernspinner), *Thaumatopoea pityocampa* (Pinienprozessionsspinner), *Phalera bucephala* (Mondfleck), *Cheimatobia brumata* (Kleiner Frostspanner), *Hibernia defoliaria* (Grosser Frostspanner), *Bupalus piniarius* (Kiefernspanner), *Hyphantria cunea* (Weisser Bärenspinner), *Agrotis segetum* (Wintersaateule), *Agrotis ypsilon* (Ypsiloneule), *Barathra brassicae* (Kohleule), *Cirphis unipuncta* (Heerwurm), *Prodenia litura* (Baumwollraupe), *Laphygma exigua* (Rüben-Heerwurm), *Panolis flammea* (Forleule), *Earias insulana* (Baumwollkapselwurm), *Plusia gamma* (Gammaeule), *Alabama argillacea* (Baumwollblattwurm), *Lymantria dispar* (Schwammspinner), *Lymantria monacha* (Nonne), *Pieris brassicae* (Kohlweissling), *Aporia crataegi* (Baumweissling);

— aus der Ordnung der Käfer *(Coleoptera)* beispielsweise *Blitophaga undata* (Schwarzer Rübenaaskäfer), *Melanotus communis* (Drahtwurm), *Limonius californicus* (Drahtwurm), *Agriotes lineatus* (Saatschnellkäfer), *Agricotes obscurus* (Humusschnellkäfer), *Agrilus sinuatus* (Birnbaum-Prachtkäfer), *Meligethes aeneus* (Rapsglanzkäfer), *Atomaria linearis* (Moosknopfkäfer), *Epilachna varivestris* (Mexikanischer Bohnenkäfer), *Phyllopertha horticola* (Junikäfer), *Popillia japonica* (Japankäfer), *Melolontha melolontha* (Feldmaikäfer), *Melolontha hippocastani* (Waldmaikäfer), *Amphimallus solstitialis* (Brachkäfer), *Crioceris asparagi* (Spargelhähnchen), *Lema melanopus* (Getreidehähnchen), *Leptinotarsa decemlineata* (Kartoffelkäfer), *Phaedon cochleariae* (Meerrettich-Blattkäfer), *Phyllotreta nemorum* (Kohlerdfloh), *Chaetocnema tibialis* (Rübenflohkäfer), *Phylloides chrysocephala* (Raps-Flohkäfer), *Diabrotica 12-punctata* (Südlicher Maiswurzelwurm), *Cassida nebulosa* (Nebliger Schildkäfer), *Bruchus lentis* (Linsenkäfer), *Bruchus rufimanus* (Pferdebohnenkäfer), *Bruchus pisorum* (Erbsenkäfer), *Sitona lineatus* (Linierter Blattrandkäfer), *Otiorrhynchus sulcatus* (Gefurchter Lappenrüssler), *Otiorrhynchus ovatus* (Erdbeerwurzelrüssler), *Hylobies abietis* (Grosser Brauner Rüsselkäfer), *Byctiscus betulae* (Rebenstecher), *Anthonomus pomorum* (Apfelblütenstecher), *Anthonomus grandis* (Kapselkäfer), *Ceuthorrhynchus assimilis* (Kohlschotenrüssler), *Ceuthorrhynchus napi* (Grosser Kohltriebrüssler), *Sitophilus granaria* (Kornkäfer), *Anisandrus dispar* (Ungleicher Holzborkenkäfer), *Ips typographus* (Buchdrucker), *Blastophagus piniperda* (Gefurchter Wandgärtner);

— aus der Ordnung der Zweiflügler *(Diptera)* beispielsweise *Mayetiola destructor* (Hessenfliege), *Dasyneura brassicae* (Kohlschoten-Gallmücke), *Contarinia tritici* (Gelbe Weizen-Gallmücke), *Haplodiplosis equestris* (Sattelmücke), *Tipula paludosa* (Wiesenschnake), *Tipula oleracea* (Kohlschnake), *Dacus cucurbitae* (Melonenfliege), *Dacus oleae* (Olivenfliege), *Ceratitis capitata* (Mittelmeer-Fruchtfliege), *Rhagoletis cerasi* (Kirschfruchtfliege), *Rhagoletis pomonella* (Apfelmade), *Anastrepha ludens* (Mexikanische Fruchtfliege), *Oscinella frit* (Fritfliege), *Phorbia coarctata* (Brachfliege), *Phorbia antiqua* (Zwiebelfliege), *Phorbia brassicae* (Kleine Kohlfliege), *Pegomya hyoscyami* (Rübenfliege);

— aus der Ordnung der Hautflügler *(Hymenoptera)* beispielsweise *Athalia rosae* (Rübenblattwespe), *Hoplocampa minuta* (Pflaumensägewespe), *Monomorium pharaonis* (Pharaoameise), *Solenopsis geminata* (Feuerameise), *Atta sexdens* (Blattschneiderameise);

— aus der Ordnung der Wanzen *(Heteroptera)* beispielsweise *Nezara viridula* (Grüne Reiswanze), *Eurygaster integriceps* (Asiatische Getreidewanze), *Blissus leucopterus* (Chinch bug), *Dysdercus cingulatus* (Kapok-Wanze), *Dysdercus intermedius* (Baumwollwanze), *Piesma quadrata* (Rübenwanze), *Lygus pratensis* (Gemeine Wiesenwanze);

— aus der Ordnung der Pflanzensauger *(Homoptera)* beispielsweise *Perkinsiella saccharicida* (Zuckerrohrzikade), *Nilaparvata lugens* (Braune Zikade), *Empoasca fabae* (Kartoffelzikade), *Psylla mali* (Apfelblattsauger), *Psylla piri* (Birnblattsauger), *Trialeurodes vaporariorum* (Weisse Fliege), *Aphis fabae* (Schwarze Bohnenlaus), *Aphis pomi* (Grüne Apfellaus), *Aphis sambuci* (Holunderblattlaus), *Aphidula nastrutii* (Kreuzdornblattlaus), *Cerosipha grossypii* (Gurkenblattlaus), *Sappaphis mali* (Rosige Apfellaus), *Sappaphis mala* (Mehlige Birnblattlaus), *Dysaphis radicola* (Mehlige Apfelfalterlaus), *Brachycaudus cardui* (Grosse Pflaumenblattlaus), *Brevicoryne brassicae* (Kohlblattlaus), *Phorodon humuli* (Hopfenblattlaus), *Rhopalomyzus ascalonicus* (Zwiebellaus), *Myzodes persicae* (Grüne Pfirsichlaus), *Myzus cerasi* (Schwarze Sauerkirschenlaus), *Dysaulacorthum pseudosolani* (Gefleckte Kartoffellaus), *Acyrthosiphon onobrychis* (Grüne Erbsenlaus), *Macrosiphon rosae* (Grosse Rosenblattlaus), *Megoura viciae* (Wickenlaus), *Schizoneura lanuginosa* (Birnenblattlaus), *Pemphigus bursarius* (Salatwurzellaus), *Dreyfusia nord-mannianae* (Tannentrieblaus), *Dreyfusia piceae* (Weisstannenstammlaus), *Adelges laricis* (Rote Fichtengallenlaus), *Viteus vitifolii* (Reblaus);

— aus der Ordnung der Termiten *(Isoptera)* beispielsweise *Reticulitermes lucifugus*;

— aus der Ordnung der Geradflügler *(Orthoptera)* beispielsweise *Forficula auricularia* (Gemeiner Ohrwurm), *Acheta domestica* (Heimchen), *Gryllotalpa gryllotalpa* (Maulwurfsgrille),

*Tachycines asynamorus* (Gewächshausschrekke), *Locusta migratoria* (Wanderheuschrecke), *Stauronotus maroccanus* (Marokkanische Wanderheuschrecke), *Schistocerca peregrina* (Wanderheuschrecke), *Nomadacris septemfasciata* (Wanderheuschrecke), *Melanoplus spretus* (Felsengebirgsheuschrecke), *Melanoplus femur-rubrum* (Rotbeinige Heuschrecke), *Blatta orientalis* (Küchenschabe), *Blattella germanica* (Deutsche Schabe), *Periplaneta americana* (Amerikanische Schabe), *Blabera gigantea* (Riesenschabe).

Zur Klasse der Spinnentiere *(Arachnoidea)* gehören Milben und Zecken *(Acarina)* beispielsweise *Ixodes ricinus* (Holzblock), *Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.*

Die erfindungsgemässen Verbindungen können mit Erfolg im Pflanzenschutz sowie auf dem Hygiene-, Vorratsschutz- und Veterinärsektor als Schädlingsbekämpfungsmittel eingesetzt werden.

Die Wirkstoffe können als solche, in Form ihrer Formulierungen oder den daraus bereiteten Anwendungsmöglichkeiten, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Giessen angewendet werden. Die Anwendungsformen richten sich ganz nach den Verwendungszwecken; sie sollten in jedem Fall möglichst die feinste Verteilung der erfindungsgemässen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Äthanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wässerige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylenoctylphenoläther, äthoxyliertes Isooctylphenol, Octylphenol, Nonylphenon, Alkylphenolpolyglykoläther, Tributylphenylpolyglykoläther, Alkylarylpolyätheralkohole, Isotridecylalkohol, Fettalkoholäthylenoxidkondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylzellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind:

I. 3 Gewichtsteile O-Äthyl-S-n-propyl-O-(2-brom-4-fluorphenyl)thiophosphat werden mit 97 Gewichtsteilen feinteiligen Kaolins innig vermischt. Man erhält auf diese Weise ein Stäubemittel, das 3 Gew.% des Wirkstoffs enthält.

II. 30 Gewichtsteile O-Äthyl-S-n-propyl-O-(3-chlor-4-fluorphenyl)thiophosphat werden mit einer Mischung aus 92 Gewichtsteilen pulverförmigen Kieselsäuregels und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 20 Gewichtsteile O-Äthyl-S-i-butyl-O-(4-fluorphenyl)-(di)thiophosphat werden in einer Mischung gelöst, die aus 80 Gewichtsteilen Xylol, 10 Gewichtsteilen des Anlagerungsproduktes von 8 bis 10 mol Äthylenoxid an 1 mol Ölsäure-N-monoäthanolamid, 5 Gewichtsteilen Calciumsalz der Dodecylbenzolsulfonsäure und 5 Gewichtsteilen des Anlagerungsproduktes von 40 mol Äthylenoxid an 1 mol Rizinusöl besteht. Durch Ausgiessen und feines Verteilen der Lösung in 100 000 Gewichtsteilen Wasser erhält man eine wässerige Dispersion, die 0,02 Gew.% des Wirkstoffs enthält.

IV. 20 Gewichtsteile O-Äthyl-S-sek.-butyl-O-(3-chlor-4-fluorphenyl)thiophosphat werden in einer Mischung gelöst, die aus 40 Gewichtsteilen Cyclohexanon, 30 Gewichtsteilen Isobutanol, 20 Gewichtsteilen des Anlagerungsproduktes von 7 mol Äthylenoxid an 1 mol Isooctylphenol und 10 Gewichtsteilen des Anlagerungsproduktes von 40 mol Äthylenoxid an 1 mol Rizinusöl besteht. Durch Eingiessen und feines Verteilen der Lösung in 100 000 Gewichtsteilen Wasser erhält man eine wässerige Dispersion, die 0,02 Gew.% des Wirkstoffs enthält.

Granulate, z.B. Umhüllungs-, Impränierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löss, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Zellulosepulver und andere feste Trägerstoffe.

Die Formulierungen enthalten im allgemeinen zwischen 0,1 und 95 Gew.% Wirkstoff, vorzugsweise zwischen 0,5 und 90 Gew.%.

Die Wirkstoffkonzentrationen in den anwendungsfertigen Zubereitungen können in grösseren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit über 95 Gew.% Wirkstoff oder sogar den Wirkstoff ohne Zusätze auszubringen.

Zu den Wirkstoffen können Öle verschiedenen Typs, Herbizide, Fungizide, andere Insektizide, Bakterizide, gegebenenfalls auch erst unmittelbar vor der Anwendung (Tankmix), zugesetzt werden. Diese Mittel können zu den erfindungsgemässen Mitteln im Gewichtsverhältnis 1:10 bis 10:1 zugemischt werden.

Beispielsweise können folgende Mittel zugemischt werden:

1,2-Dibrom-3-chlorpropan,
1,3-Dichlorpropen,
1,3-Dichlorpropen + 1,2-Dichlorpropan,
1,2-Dibromäthan,
2-sek.-Butylphenyl-N-methylcarbamat,
o-Chlorphenyl-N-methylcarbamat,
3-Isopropyl-5-methylphenyl-N-methylcarbamat,
o-Isopropoxyphenyl-N-methylcarbamat,
3,5-Dimethyl-4-methylmercaptophenyl-N-methylcarbamat,
4-Dimethylamino-3,5-xylyl-N-methylcarbamat,
2-(1,3-Dioxolan-2-yl)phenyl-N-methylcarbamat,
1-Naphthal-N-methylcarbamat,
2,3-Dihydro-2,2-dimethylbenzofuran-7-yl-N-methylcarbamat,
2,2-Dimethyl-1,3-benzodioxol-4-yl-N-methylcarbamat,
2-Dimethylamino-5,6-dimethyl-4-pyrimidinyl-dimethylcarbamat,
2-Methyl-2-(methylthio)propionaldehyd-O-(methylcarbamoyl)oxim,
S-Methyl-N-[(methylcarbomoyl)oxy]thioacetimidat,
Methyl-N',N'-dimethyl-N-[(methylcarbamoyl)-oxy]-1-thiooxamidat,
N-(2-Methyl-4-chlorphenyl)-N',N'-dimethylformamidin,
Tetrachlorthiophen,
1-(2,6-Difluorbenzoyl)-3-(4-chlorphenyl)-harnstoff,
O,O-Dimethyl-O-(p-nitrophenyl)phosphorthioat,
O,O-Diäthyl-O-(p-nitrophenyl)phosphorthioat,
O-Äthyl-O-(p-nitrophenyl)phenylphosphonothioat,
O,O-Dimethyl-O-(3-methyl-4-nitrophenyl)-phosphorthioat,
O,O-Diäthyl-O-(2,4-dichlorphenyl)phosphorthioat,
O-Äthyl-O-(2,4-dichlorphenyl)phenylphosphonothioat,
O,O-Dimethyl-O-(2,4-trichlorphenyl)phosphorthioat,
O-Äthyl-O-(2,4,5-trichlorphenyl)äthylphosphonothioat,
O,O-Dimethyl-O-(4-brom-2,5-dichlorphenyl)-phosphorthioat,
O,O-Dimethyl-O-(2,5-dichlor-4-jodphenyl)-phosphorthioat,
O,O-Dimethyl-O-(3-methyl-4-methylthiophenyl)phosphorthioat,
O-Äthyl-O-(3-methyl-4-methylthiophenyl)isopropylphosphoramidat,
O,O-Diäthyl-O-[p-(methylsulfinyl)phenyl]-phosphorthioat,
O-Äthyl-S-phenyläthylphosphonodithioat,
O,O-Diäthyl-[2-chlor-1-(2,4-diorchlorphenyl)-vinyl]phosphat,
O,O-Dimethyl-[2-chlor-1-(2,4,5-trichlorphenyl)]vinylphosphat,
O,O-Dimethyl-S-(1'-phenyl)äthylacetatphosphordithioat,
Bis(dimethylamino)fluorphosphinoxid,
Octamethylpyrophosphoramid,
O,O,O,O-Tetraäthyldithiopyrophosphat,
S-Chlormethyl-O,O-diäthylphosphordithioat,
O-Äthyl-S,S-dipropylphosphordithioat,
O,O-Dimethyl-O-2,2-dichlorvinylphosphat,
O,O-Dimethyl-1,2-dibrom-2,2-dichloräthylphosphat,
O,O-Dimethyl-2,2,2-trichlor-1-hydroxyäthylphosphonat,
O,O-Dimethyl-S-[1,2-biscarbäthoxyäthyl-(1)]-phosphordithioat,
O,O-Dimethyl-O-(1-methyl-2-carbomethoxyvinyl)phosphat,
O,O-Dimethyl-S-(N-methylcarbamoylmethyl)-phosphordithioat,
O,O-Dimethyl-S-(N-methylcarbamoylmethyl)-phosphorthioat,
O,O-Dimethyl-S-(N-methoxyäthylcarbamoylmethyl)phosphordithioat,
O,O-Dimethyl-S-(N-formyl-N-methylcarbamoylmethyl)phosphordithioat,
O,O-Dimethyl-O-[1-methyl-2-(methylcarbamoyl)vinyl]phosphat,
O,O-Dimethyl-O-[(1-methyl-2-dimethylcarbamoyl)vinyl]phosphat,
O,O-Dimethyl-O-[(1-methyl-2-chlor-2-diäthylcarbamoyl)vinyl]phosphat,

O,O-Diäthyl-S-(äthylthiomethyl)phosphordithioat,
O,O-Diäthyl-S-[(p-chlorphenylthio)methyl]-phosphordithioat,
O,O-Dimethyl-S-(2-äthylthioäthyl)phosphorthioat,
O,O-Dimethyl-S-(2-äthylthioäthyl)phosphordithioat,
O,O-Dimethyl-S-(2-äthylsulfinyläthyl)phosphorthioat,
O,O-Diäthyl-S-(2-äthylthioäthyl)phosphordithioat,
O,O-Diäthyl-S-(2-äthylsulfinyläthyl)phosphorthioat,
O,O-Diäthylthiophosphoryliminophenylacetonitril,
O,O-Diäthyl-S-(2-chlor-1-phthalimidoäthyl)-phosphordithioat,
O,O-Diäthyl-S-[6-chlorbenzoxazolon-(2)-yl-(3)]-methyldithiophosphat,
O,O-Dimethyl-S-[2-methoxy-1,3,4-thiadiazol-5-[4H]-onyl-(4)-methyl]phosphordithioat,
O,O-Diäthyl-O-[3,5,6-trichlorpyridyl-(2)]-phosphorthioat,
O,O-Diäthyl-O-(2-pyrazinil)phosphorthioat,
O,O-Diäthyl-O-[2-isopropyl-4-methyl-pyrimidinyl-(6)]-phosphorthioat,
O,O-Diäthyl-O-[2-(diäthylamino)-6-methyl-4-pyrimidinyl]thionophosphat,
O,O-Dimethyl-S-(4-oxo-1,2,3-benzotriazin-3-[4H]-yl-methyl)phosphordithioat,
O,O-Dimethyl-S-[(4,6-diamino-1,3,5-triazin-2-yl)methyl]phosphordithioat,
O,O-Diäthyl-(1-phenyl-1,2,4-triazol-3-yl)-thionophosphat,
O,S-Dimethylphosphoramidothioat,
O,S-Dimethyl-N-acetylphosphoramidothioat,
γ-Hexachlorcyclohexan,
1,1-Di-(p-methoxyphenyl)-2,2,2-trichloräthan,
6,7,8,9,10,10-Hexachloro-1,5,5a,6,9,9a-hexahydro-6,9-methano-2,4,3-benzodioxathiepin-3-oxid,
Pyrethrine,
DL-2-Allyl-3-methylcyclopenten-(2)-on-(1)-yl-(4)-DL-cis,transchrysanthemat,
5-Benzylfuryl-(3)-methyl-DL-cis,transchrysanthemat,
3-Phenoxybenzyl(±)-cis,trans-2,2-dimethyl-3-(2,2-dichlorvinyl)cyclopropancarboxylat,
α-Cyano-3-phenoxybenzyl(±)-cis,trans-2,2-dimethyl-3-(2,2-dichlorvinyl)cyclopropancarboxylat,
(s)-α-Cyano-3-phenoxybenzyl-cis(1R,3R)-2,2-dimethyl-3-(2,2-dibromvinyl)cyclopropancarboxylat,
3,4,5,6-Tetrahydrophthalimidoäthyl-DL-cis,-trans-chrysanthemat,
2-Methyl-5-(2-propinyl)-3-furylmethylchrysanthemat,
α-Cyano-3-phenoxybenzyl-α-isopropyl-4-chlorphenylacetat.

Die folgenden Beispiele belegen die biologische Wirkung der neuen Verbindungen. Vergleichsmittel ist der bekannte Wirkstoffe

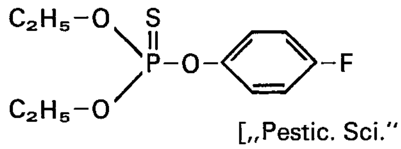
I

[„Pestic. Sci." *4*, 703 (1973)]

Die Numerierung der übrigen Wirkstoffe entspricht der tabellarischen Auflistung.

*Beispiel A*

*Kontaktwirkung auf Schaben* (Blatta orientalis)

Der Boden eines 1-l-Einmachglases wird mit der acetonischen Lösung des Wirkstoffs behandelt. Nach dem Verdunsten des Lösungsmittels setzt man je Glas 5 adulte Schaben.

Die Mortalitätsrate wird nach 48 h bestimmt.

| Wirkstoff Nr. | Wirkstoff-menge/Glas (mg) | Mortalitätsrate (%) |
|---|---|---|
| 2 | 0,04 | 80 |
| 9 | 0,1 | 100 |
| 10 | 0,04 | 100 |
| 12 | 0,1 | 100 |
| 39 | 0,04 | 100 |
| 40 | 0,1 | 100 |
| 41 | 0,1 | 100 |
| 51 | 0,1 | 100 |
| 52 | 0,04 | 100 |
| 66 | 0,1 | 100 |
| 69 | 0,04 | 80 |
| 70 | 0,1 | 100 |
| 71 | 0,1 | 100 |

*Beispiel B*

*Kontaktwirkung auf Stubenfliegen* (Musca domestica)*; Dauerkontakt*

Beide Teile einer Petrischale von 10 cm Durchmesser werden mit insgesamt 2 ml der acetonischen Wirkstofflösung ausgekleidet. Nach dem Verdunsten des Lösungsmittels (ca. 30 min) bringt man je 10 Fliegen in die Schalen. Die Mortalität wird nach 4 h festgestellt.

| Wirkstoff Nr. | Wirkstoff-menge/Petri-schale (mg) | Mortalitätsrate (%) |
|---|---|---|
| 9 | 0,01 | 100 |
| 10 | 0,001 | 80 |
| 19 | 0,01 | 80 |
| 20 | 0,02 | 100 |
| 39 | 0,005 | 100 |
| 40 | 0,002 | 80 |
| 41 | 0,005 | 100 |
| 44 | 0,005 | 100 |
| 51 | 0,01 | 80 |
| 52 | 0,01 | 100 |
| 65 | 0,01 | 100 |
| 66 | 0,02 | 100 |
| 69 | 0,02 | 100 |

*Beispiel C*

*Kontaktwirkung auf Stubenfliegen* (Musca domestica)

4 d alte Imagines erhalten in leichter $CO_2$-Narkose 1 µl der acetonischen Lösung des Wirkstoffs auf das ventrale Abdomen appliziert. Hierzu wird eine Mikrometerspritze verwendet. Je 20 Versuchstiere mit gleicher Behandlung bringt man in einen Folienbeutel (ca. 500 ml).

Nach 4 d zählt man die Tiere in Rückenlage aus und ermittelt graphisch die $LD_{50}$.

| Wirkstoff | $LD_{50}$ (µg/Fliege) |
|---|---|
| 9 | 0,095 |
| 10 | 0,06 |
| 12 | 0,09 |
| 39 | 0,1 |
| 40 | 0,04 |
| 41 | 0,07 |
| 44 | 0,09 |

*Beispiel D*

*Zuchtversuch mit Stubenfliegen* (Musca domestica)

50 g eines Nährbodens aus
100 Teilen Wasser
10 Teilen Bäckerhefe
10 Teilen Trockenmilch
1 Teil Agar

werden in warmem Zustand mit der wässerigen Aufbereitung des Wirkstoffes gründlich durchmischt.

Nach Erkalten belegt man den Nährboden mit ca. 0,1 ml Fliegeneiern und beobachtet deren Entwicklung über eine Woche.

Die Versuchstemperatur liegt bei 20°C.

| Wirkstoff Nr. | Wirkstoffkonzentration im Nährboden (ppm) | |
|---|---|---|
| 2 | 1,0 | keine Entwicklung |
| 9 | 0,1 | starke Hemmung |
| 10 | 0,5 | keine Entwicklung |
| 18 | 2,5 | keine Entwicklung |
| 19 | 2,5 | keine Entwicklung |
| 20 | 2,5 | keine Entwicklung |
| 39 | 1,0 | keine Entwicklung |
| 40 | 2,5 | keine Entwicklung |
| 41 | 1,0 | keine Entwicklung |
| 44 | 2,5 | keine Entwicklung |
| 51 | 2,5 | keine Entwicklung |
| 65 | 2,5 | keine Entwicklung |
| 66 | 2,5 | keine Entwicklung |
| 71 | 2,5 | keine Entwicklung |

*Beispiel E*

*Frass- und Kontaktwirkung auf Raupen der Kohlschabe* (Plutella maculipennis)

Blätter von jungen Kohlpflanzen werden 3 s lang in die wässerige Wirkstoffemulsion getaucht und nach kurzem Abtropfen auf einen angefeuchteten Filter in eine Petrischale gelegt. Das Blatt wird darauf mit 10 Raupen des 4. Stadiums belegt.

Nach 48 h beurteilt man die Wirkung.

| Wirkstoff Nr. | Konzentration der Wirkstoff-emulsion (%) | Mortalitätsrate (%) |
|---|---|---|
| 2 | 0,004 | 80 |
| 9 | 0,002 | 80 |
| 10 | 0,002 | 100 |
| 12 | 0,002 | 80 |
| 18 | 0,005 | 100 |
| 19 | 0,004 | 80 |
| 20 | 0,005 | 100 |
| 22 | 0,005 | 100 |
| 39 | 0,001 | 100 |
| 40 | 0,001 | 100 |
| 41 | 0,002 | 100 |
| 44 | 0,002 | 100 |
| 50 | 0,002 | 80 |
| 51 | 0,004 | 100 |
| 52 | 0,004 | 100 |
| 54 | 0,005 | 100 |
| 69 | 0,001 | 80 |
| 70 | 0,004 | 100 |
| 71 | 0,004 | 100 |
| Vergleichsmittel I | 0,02 | <80 |

*Beispiel F*

*Kontaktwirkung auf Zecken* (Ornithodorus moubata)

Geprüft wird mit Zecken im 3. Larvenstadium. Dazu taucht man die Tiere, die sich in einem Papierbeutel befinden, für 3 s in die Prüfemulsion. Die Beutel werden frei aufgehängt. Nach 48 h wird die Wirkung auf die Zecken beurteilt.

| Wirkstoff Nr. | Wirkstoff-konzentration der Emulsion (ppm) | Mortalitätsrate (%) |
|---|---|---|
| 9 | 10 | 100 |
| 39 | 20 | 100 |
| 40 | 10 | 100 |
| 44 | 50 | 100 |
| 69 | 50 | 100 |

*Beispiel G*

*Wirkung auf Spinnmilben* (Tetranychus telarius)

Getopfte Buschbohnen, die das erste Folgeblattpaar entwickelt haben und einen starken Besatz aller Stadien der Spinnmilbe *Tetranychus telarius* tragen, werden in der Spritzkabine mit der wässerigen Wirkstoffaufbereitung tropfnass gespritzt. Die Pflanzen kommen dazu auf einen Drehteller und werden von allen Seiten mit 50 ml Spritzbrühe besprüht. Der Sprühvorgang dauert ca. 22 s.

Nach 8 d werden die Pflanzen auf lebende Spinnmilben untersucht.

| Wirkstoff Nr. | Konzentration der Wirkstoff-aufbereitung (%) | Mortalitätsrate (%) |
|---|---|---|
| 2 | 0,005 | 100 |
| 10 | 0,01 | 100 |
| 22 | 0,02 | 100 |
| 25 | 0,02 | 100 |
| 41 | 0,01 | 100 |
| 69 | 0,02 | 100 |
| 70 | 0,008 | 100 |
| Vergleichs-mittel I | 0,1 | 80 |

**Patentansprüche**

1. O,S-Dialkyl-O-(4-fluorphenyl)-(di)thiophosphorsäureester der Formel I

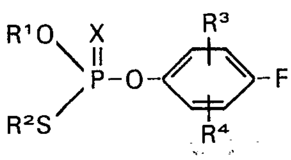 (I)

in der

$R^1$ Alkyl mit 1 bis 3 Kohlenstoffatomen,

$R^2$ Alkyl mit 1 bis 5 Kohlenstoffatomen, Cycloalkyl mit 5 oder 6 Kohlenstoffatomen, Alkoxyalkyl mit 2 bis 7 Kohlenstoffatomen oder Alkylthioalkyl mit 2 bis 7 Kohlenstoffatomen,

$R^3$ Wasserstoff, Halogen, Alkyl mit 1 bis 4 Kohlenstoffatomen, Halogenalkyl, Alkoxy oder Alkylthio mit jeweils 1 bis 4 Kohlenstoffatomen, Cyano oder Nitro,

$R^4$ Halogen, Alkyl mit 1 bis 4 Kohlenstoffatomen, Halogenalkyl, Alkoxy oder Alkylthio mit jeweils 1 bis 4 Kohlenstoffatomen, Cyano oder Nitro, und

X Sauerstoff oder Schwefel bedeuten,

wobei $R^4$ zusätzlich Wasserstoff bedeuten kann, wenn X für Schwefel steht oder wenn X für Sauerstoff und $R^2$ für Methyl, n-Propyl, sek.-Butyl, i-Butyl, tert.-Butyl, einen Pentylrest oder 2-Methoxyäthyl stehen.

2. Schädlingsbekämpfungsmittel, enthaltend einen festen oder flüssigen Trägerstoff und mindestens einen O,S-Dialkyl-O-(4-fluorphenyl)-(di)-thiophosphorsäureester der Formel I.

3. Verwendung von O,S-Dialkyl-O-(4-fluorphenyl)-(di)thiophosphorsäureestern der Formel I zur Bekämpfung von Schädlingen.

4. Verfahren zur Bekämpfung von Schädlingen, dadurch gekennzeichnet, dass man O,S-Dialkyl-O-(4-fluorphenyl)-(di)thiophosphorsäureester der Formel I auf die Schädlinge bzw. deren Lebensräume einwirken lässt.

5. Verfahren zur Herstellung von O,S-Dialkyl-O-(4-fluorphenyl)-(di)thiophosphorsäureestern der Formel I, dadurch gekennzeichnet, dass man ein O,S-Dialkylphosphorsäureesterchlorid der Formel II

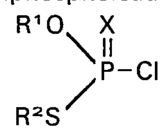 (II)

in der $R^1$, $R^2$ und X die im Anspruch 1 genannten Bedeutungen haben, mit einem Phenol der Formel III

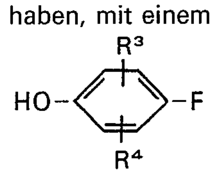 (III)

in der $R^3$ und $R^4$ die im Anspruch 1 genannten Bedeutungen haben, in Anwesenheit eines Lösungs- oder Verdünnungsmittels und gegebenenfalls in Gegenwart eines säurebindenden Mittels umsetzt.

**Claims**

1. O,S-Dialkyl-O-(4-fluorophenyl)-(di)thiophosphoric acid esters of the formula I:

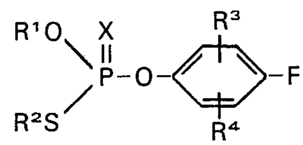 (I)

where $R^1$ is alkyl of from 1 to 3 carbon atoms, $R^2$ is alkyl of from 1 to 5 carbon atoms, cycloalkyl of 5 or 6 carbon atoms, alkoxyalkyl of from 2 to 7 carbon atoms or alkylthioalkyl of from 2 to 7 carbon atoms, $R^3$ is hydrogen, halogen, alkyl of from 1 to 4 carbon atoms, haloalkyl, alkoxy or alkylthio, each of from 1 to 4 carbon atoms, cyano or nitro, $R^4$ denotes halogen, alkyl of from 1 to 4 carbon atoms, haloalkyl, alkoxy or alkylthio, each of from 1 to 4 carbon atoms, cyano or nitro, and X is oxygen or sulfur, $R^4$ additionally denoting hydrogen when X is sulfur or when X is oxygen and $R^2$ is methyl, n-propyl, sec.-butyl, isobutyl, tert.-butyl, pentyl or 2-methoxyethyl.

2. A pesticide comprising a solid or liquid carrier and at least one O,S-dialkyl-O-(4-fluorophenyl)-(di)thiophosphoric acid ester of the formula I.

3. The use of O,S-dialkyl-O-(4-fluorophenyl)-(di)thiophosphoric acid esters of the formula I for combating pests.

4. A process for combating pests, wherein O,S-dialkyl-O-(4-fluorophenyl)-(di)thiophosphoric acid esters of the formula I are allowed to act on the pests or their habitat.

5. A process for manufacturing O,S-dialkyl-(4-fluorophenyl)-(di)thiophosphoric acid esters of the formula I, wherein an O,S-dialkylphosphoric acid ester chloride of the formula II:

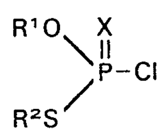 (II)

where $R^1$, $R^2$ and X have the meanings given in claim 1, is reacted with a phenol of the formula III:

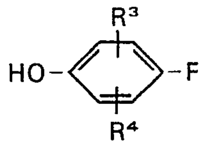

(III)

where $R^3$ and $R^4$ have the meanings given in claim 1, in the presence of a solvent or diluent and in the presence or absence of an acid binder.

**Revendications**

1. (Di)thiophosphate de O,S-dialkyl-O-(4-fluorophényle) de formule I:

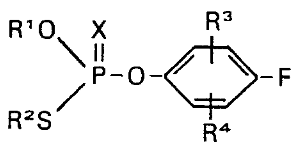

(I)

dans laquelle:
$R^1$ représente alkyle avec 1 à 3 atomes de carbone,
$R^2$ alkyle avec 1 à 5 atomes de carbone, cycloalkyle avec 5 à 6 atomes de carbone, alcoxyalkyle avec 2 à 7 atomes de carbone, ou alkylthioalkyle avec 2 à 7 atomes de carbone,
$R^3$ hydrogène, halogène, alkyle avec 1 à 4 atomes de carbone, halogénalkyle, alcoxy ou alkylthio avec chacun 1 à 4 atomes de carbone, cyano ou nitro,
$R^4$ halogène, alkyle avec 1 à 4 atomes de carbone, halogénalkyle, alcoxy ou alkylthio avec chacun 1 à 4 atomes de carbone, cyano ou nitro, et
X oxygène ou soufre,
$R^4$ pouvant, en outre, représenter hydrogène lorsque X est soufre ou lorsque X est oxygène, et $R^2$ méthyle, n-propyle, sec.-butyle, isobutyle, tert.-butyle, un reste pentyle ou 2-méthoxyéthyle.

2. Pesticide contenant un support solide ou liquide et au moins un (di)thiophosphate de O,S-dialkyl-O-(4-fluorophényle) de formule I.

3. Utilisation de (di)thiophosphate de O,S-dialkyl-O-(4-fluorophényle) de formule I pour la lutte contre les parasites.

4. Procédé de lutte contre les parasites, caractérisé par le fait qu'on fait agir un (di)thiophosphate de O,S-dialkyl-O-(4-fluorophényle) de formule I sur les parasites ou leur biotope.

5. Procédé de préparation de (di)thiophosphate de O,S-dialkyl-O-(4-fluorophényle) de formule I, caractérisé par le fait qu'en présence d'un solvant ou diluant et, éventuellement, en présence d'un agent liant les acides, on fait réagir un chlorure de phosphate d'O,S-dialkyle de formule II

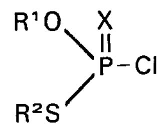

(II)

dans laquelle $R^1$, $R^2$ et X ont les significations indiquées dans la revendication 1, avec un phénol de formule III

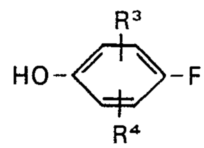

(III)

dans laquelle $R^3$ et $R^4$ ont les significations données dans la revendication 1.